(19) Europäisches Patentamt
European Patent Office
Office européen des brevets

(11) EP 4 691 975 A1

(12) # EUROPEAN PATENT APPLICATION
published in accordance with Art. 153(4) EPC

(43) Date of publication:
**11.02.2026 Bulletin 2026/07**

(21) Application number: **24780230.9**

(22) Date of filing: **25.03.2024**

(51) International Patent Classification (IPC):
***C01B 25/18*** $^{(2006.01)}$ ***H01M 4/36*** $^{(2006.01)}$
***H01M 4/505*** $^{(2010.01)}$ ***H01M 4/525*** $^{(2010.01)}$

(52) Cooperative Patent Classification (CPC):
**C01B 25/18; C01G 33/00; H01M 4/36; H01M 4/505; H01M 4/525;** Y02E 60/10

(86) International application number:
**PCT/JP2024/011789**

(87) International publication number:
**WO 2024/204115 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023050645**

(71) Applicant: **Dowa Holdings Co., Ltd.**
**Tokyo 101-0021 (JP)**

(72) Inventors:
- **MASHIMO Suguru**
  **Tokyo 101-0021 (JP)**
- **YOSHIDA Masahiro**
  **Tokyo 101-0021 (JP)**
- **ABE Daisuke**
  **Tokyo 101-0021 (JP)**
- **TANOUE Koji**
  **Tokyo 101-0021 (JP)**

(74) Representative: **Schmidbauer, Andreas Konrad**
**Wagner & Geyer Partnerschaft mbB**
**Patent- und Rechtsanwälte**
**Gewürzmühlstrasse 5**
**80538 München (DE)**

(54) **AQUEOUS SOLUTION CONTAINING NIOBIUM POLYACID IONS, LITHIUM IONS, AND PHOSPHATE IONS, PRODUCTION METHOD THEREFOR, AND METHOD FOR PRODUCING ACTIVE MATERIAL FOR LITHIUM SECONDARY BATTERY**

(57) [Problem] To provide an aqueous solution containing niobium polyacid ions, lithium ions, and phosphate ions, with which an increase in the specific surface area of a coated positive electrode active material is prevented when the surfaces of positive electrode active material particles of a lithium ion secondary battery are coated with a coating layer containing niobium, lithium, and phosphorus and being a solid electrolyte, and which has excellent storage stability, and a method for producing the same.

[Solution] An aqueous solution, which contains niobium polyacid ions, lithium ions, and phosphate ions, and in which a value of P/(Nb + Li + P) being a ratio of a number of moles of phosphorus to a sum of a number of moles of each of niobium, lithium, and phosphorus contained in the aqueous solution is 0.04 or more and less than 0.5, Li/Nb being a molar ratio of lithium to niobium is more than 0.6 and 2.0 or less, and preferably, hydrogen peroxide is further contained at 0.01 mass% or more and 10 mass% or less.

[Fig.1]

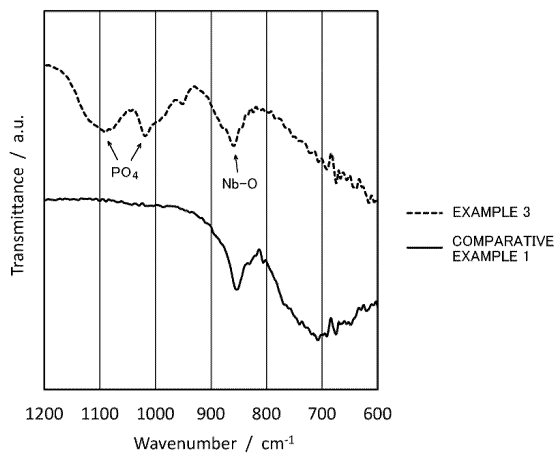


EP 4 691 975 A1

## Description

### Technical Field

The present invention relates to an aqueous solution containing niobium polyacid ions, lithium ions, and phosphate ions for coating the surfaces of positive electrode active material particles of a lithium ion secondary battery with lithium niobate being a solid electrolyte, a method for producing an aqueous solution containing niobium polyacid ions, lithium ions, and phosphate ions, and a method for producing an active material for a lithium secondary battery having a coating layer containing lithium niobate.

### Background Art

A positive electrode active material of a lithium ion secondary battery has conventionally generally been formed of a composite oxide of lithium and a transition metal. In particular, lithium cobaltate ($LiCoO_2$), which is a composite oxide containing Co as a component, is heavily used. In addition, recently, the use of lithium nickel oxide ($LiNiO_2$), lithium manganate ($LiMn_2O_4$), or a ternary system ($LiN_{1l/3}Mn_{1/3}CO_{1/3}O_2$ or the like), or a composite type thereof has also been increasing.

As an electrolytic solution of a lithium ion secondary battery, one obtained by dissolving a lithium salt such as an electrolyte $LiPF_6$ or $LiBF_4$ in a mixed solvent of a cyclic carbonate ester such as PC (propylene carbonate) or EC (ethylene carbonate) and a chain ester such as DMC (dimethyl carbonate), EMC (ethyl methyl carbonate), or DEC (diethyl carbonate) is mainly used. Such an organic solvent is weak against an oxidizing atmosphere, and is likely to cause an oxidative decomposition reaction when it comes into contact with a transition metal such as Co, Ni, or Mn particularly on the surface of the positive electrode. A possible factor for this is that the surface of the positive electrode is at a high potential, the transition metal in a highly oxidized state acts catalytically, or the like. Therefore, it is effective for maintaining the performance of the electrolytic solution to prevent contact between the electrolytic solution and the transition metal (for example, one or more types of Co, Ni, and Mn) that forms the positive electrode active material as much as possible.

Further, as a method for fundamentally solving the problem of the organic solvent-based electrolytic solution, an all-solid-state lithium ion secondary battery in which the electrolytic solution is replaced with a nonflammable solid electrolyte has been proposed.

In general, an electrode reaction in a battery occurs at an interface between an electrode active material and an electrolytic solution. Here, when an electrolytic solution being a liquid is used as the electrolytic solution, the electrolytic solution permeates the surface of the electrode active material present on the electrode, and a reaction interface for charge transfer is formed. In the case of an all-solid-state battery, a solid electrolyte having an ion conduction property plays a role of an electrolytic solution, however, the solid electrolyte itself does not have fluidity like a liquid, and therefore, it is necessary to mix a powder to become the electrode active material with the solid electrolyte before forming a secondary battery, or to coat a powder to become the electrode active material with the solid electrolyte to form a composite in advance.

However, in the case of an all-solid-state lithium ion secondary battery, there is a problem that the resistance generated when lithium ions move across the interface between the positive electrode active material and the solid electrolyte (hereinafter sometimes referred to as "interfacial resistance") increases, and the performance such as battery capacity of the all-solid-state lithium ion secondary battery tends to decrease. The increase in the interfacial resistance is believed to be caused by a reaction between the positive electrode active material and the solid electrolyte to form a high resistance part on the surface of the positive electrode active material, and it is known that the interfacial resistance can be reduced by coating the surface of lithium cobaltate, which is the positive electrode active material, with lithium niobate.

For example, PTL 1 discloses a technique for wetcoating the surface of a positive electrode active material with a lithium ion conductive oxide containing niobium or tantalum and lithium by a wet method for the purpose of improving the interfacial resistance between the positive electrode active material and the solid electrolyte. However, in this coating technique, an alkoxide of niobium or tantalum is used as a niobium or tantalum source and an absolute alcohol, which is a volatile organic compound, is used as a solvent, and therefore there is a concern that the working environment will deteriorate. In addition, in the case of this coating technique, there is also a cost problem such that explosion-proofing measures are required for the apparatus used for coating.

In order to solve these problems, for example, PTL 2 discloses a coating method with lithium niobate using water as a solvent. A coating liquid of lithium niobate disclosed in PTL 2 is configured such that niobium oxide, which is poorly soluble in water, is transformed into a peroxo complex or an oxalate complex and made soluble in water. Therefore, in the case of the coating liquid of lithium niobate using the peroxo complex disclosed in PTL 2, it is necessary to add 8 moles or more of hydrogen peroxide per mole of niobic acid, and since niobic acid does not dissolve in aqueous hydrogen peroxide, it is further necessary to add 1 mole or more of ammonia per mole of niobic acid. However, in the case of this coating liquid, the peroxo complex is chemically unstable, and therefore there is a problem that the storage stability is poor. In addition, in the case of this coating liquid, there is also a problem that the metal components of the positive electrode active material to be coated are eluted by the ammonia added to the coating liquid.

As a technique for improving the chemical stability of a peroxo complex of niobium, for example, PTL 3 discloses a technique in which phosphate-based ions are added to a coating liquid of lithium niobate. In this case, although it is not explicitly stated in PTL 3, it is considered that the phosphate-based ions act as a negative catalyst for the decomposition reaction of hydrogen peroxide. However, in the case of this coating liquid, large amounts of hydrogen peroxide and ammonia are required for transforming niobium into a peroxo complex, and the chemical stability is insufficient, and the problem that the metal components of the positive electrode active material are eluted is also not solved.

As an aqueous solution-based coating liquid of lithium niobate with excellent chemical stability, PTL 4 discloses a precursor aqueous solution of lithium niobate formed using niobium polyacid ions and a method for producing the same. In the case of this precursor aqueous solution, niobium is made soluble in water in the form of polyacid ions, and ammonia is not used, and therefore there is also no problem of elution of the metal components of the positive electrode active material.

## Citation List

### Patent Literature

PTL 1: WO2007/004590
PTL 2: JP2012-074240A
PTL 3: JP2017-191667A
PTL 4: JP2020-066570A

## Summary of Invention

### Technical Problem

The precursor aqueous solution of lithium niobate disclosed in PTL 4 is a coating liquid with excellent characteristics such that the storage stability of the solution is excellent and dissolution of the positive electrode active material during coating is prevented. However, when the surface of the positive electrode active material is coated with lithium niobate using the precursor aqueous solution, there is a problem that the specific surface area of the lithium niobate-coated positive electrode active material increases as compared with that of the positive electrode active material before coating.

The increase in the specific surface area after coating is presumably due to the formation of pores having an extremely small pore diameter in the coating layer of lithium niobate. When the coating layer becomes porous, moisture is adsorbed onto the surface of the positive electrode active material through the pores, which may lead to deterioration of the positive electrode active material. In addition, it is not preferable that the coating layer becomes porous, because the interfacial bonding area between the coating layer being a solid electrolyte, and the positive electrode active material decreases.

An object of the invention is to provide a precursor aqueous solution of lithium niobate, with which an increase in the specific surface area of a lithium niobate-coated positive electrode active material is prevented when the surfaces of positive electrode active material particles of a lithium ion secondary battery are coated with lithium niobate being a solid electrolyte, and which has excellent storage stability, and a method for producing the same.

### Solution to Problem

[1] In order to achieve the above object, in the invention, an aqueous solution containing niobium polyacid ions, lithium ions, and phosphate ions, in which a value of P/(Nb + Li + P) being a ratio of a number of moles of phosphorus to a sum of a number of moles of each of niobium, lithium, and phosphorus contained in the aqueous solution is 0.04 or more and less than 0.5, and Li/Nb being a molar ratio of lithium to niobium is more than 0.6 and 2.0 or less is provided.

[2] The aqueous solution containing niobium polyacid ions, lithium ions, and phosphate ions according to the above item [1] may further contain hydrogen peroxide at 0.01 mass% or more and 10 mass% or less.

[3] In the aqueous solution containing niobium polyacid ions, lithium ions, and phosphate ions according to the above item [2], it is preferable that a value of ($PO_C$/Nb) being a ratio of a number of moles of hydrogen peroxide to niobium is 0.01 or more and 1 or less.

[4] In the aqueous solution containing niobium polyacid ions, lithium ions, and phosphate ions according to the above item [1], it is preferable that an absorbance of the aqueous solution at a wavelength of 660 nm is 0.1 or less.

[5] Further, in the invention, as a method for producing an aqueous solution containing niobium polyacid ions, lithium ions, and phosphate ions, a method for producing an aqueous solution containing niobium polyacid ions, lithium ions, and phosphate ions, the method including a step of dissolving a hydrous oxide of niobium and a salt containing lithium in water to obtain an aqueous solution containing niobium polyacid ions and lithium ions, and a step of adding phosphate ions to the aqueous solution containing niobium polyacid ions and lithium ions is provided.

[6] Further, in the invention, as a method for producing an aqueous solution containing niobium polyacid ions, lithium ions, and phosphate ions, a method for producing an aqueous solution containing niobium polyacid ions, lithium ions, and phosphate ions, the method including a step of dissolving a hydrous oxide of niobium and a salt containing lithium in water to obtain an aqueous solution containing niobium polyacid ions and lithium ions, and a step of adding phosphate ions and hydrogen peroxide to the aqueous solution containing niobium polyacid ions and lithium ions is provided.

[7] In the method for producing an aqueous solution containing niobium polyacid ions, lithium ions, and phosphate ions according to the above item [5] or [6], it is preferable that a value of P/(Nb + Li + P) being a ratio of a number of moles of phosphorus to a sum of a number of moles of each of niobium, lithium, and phosphorus is 0.04 or more and less than 0.5, and Li/Nb being a molar ratio of lithium to niobium is more than 0.6 and 2.0 or less.

[8] In the method for producing an aqueous solution containing niobium polyacid ions, lithium ions, and phosphate ions according to the above item [6], it is preferable that a concentration of hydrogen peroxide in the aqueous solution is 0.01 mass% or more and 10 mass% or less.

[9] In the method for producing an aqueous solution containing niobium polyacid ions, lithium ions, and phosphate ions according to the above item [6], it is preferable that a value of ($PO_A$/Nb) being a ratio of a number of moles in the addition amount of niobium and hydrogen peroxide is 0.1 or more and 1.0 or less.

[10] In the method for producing an aqueous solution containing niobium polyacid ions, lithium ions, and phosphate ions according to the above item [5] or [6], it is preferable that phosphate ions are added at a rate of 0.07 mol/min or more and 3.07 mol/min or less per mole of lithium in the aqueous solution containing niobium polyacid ions and lithium ions.

[11] In the invention, a method for producing a lithium secondary battery having a coating layer containing lithium niobate, the method including a step of subjecting a surface of an active material for a lithium secondary battery to a coating treatment with the aqueous solution containing niobium polyacid ions, lithium ions, and phosphate ions according to any one of the above items [1] to [4], and a step of subjecting the active material for a lithium secondary battery subjected to the coating treatment to a heat treatment is further provided.

## Advantageous Effects of Invention

An aqueous solution containing niobium polyacid ions, lithium ions, and phosphate ions obtained by the production method of the invention has excellent storage stability, and even when a coating layer is formed on the surface of a positive electrode active material for a lithium ion secondary battery using the aqueous solution, an increase in specific surface area is prevented. Therefore, the invention can contribute to the improvement of the performance of an all-solid-state lithium ion secondary battery.

## Brief Description of Drawings

[FIG. 1] FIG. 1 shows FT-IR spectra of aqueous solutions obtained in Comparative Example 1 and Example 3.

## Description of Embodiments

### [Positive Electrode Active Material]

Examples of the positive electrode active material to be coated with the aqueous solution containing niobium polyacid ions, lithium ions, and phosphate ions of the invention include the following materials, which are outside the scope of the invention. The positive electrode active material is a material formed of a composite oxide of Li and a transition metal M, and materials which are conventionally used for a lithium ion secondary battery, for example, lithium cobaltates ($Li_{1+X}CoO_2$, $-0.1 \leq X \leq 0.3$), lithium transition metal oxides such as $Li_{1+X}NiO_2$, $Li_{1+X}Mn_2O_4$, $Li_{1+X}Ni_{1/2}Mn_{1/2}O_2$, $Li_{1+X}Ni_{1/3}Co_{1/3}Mn_{1/3}O_2$ (all $-0.1 \leq X \leq 0.3$), and $Li_{1+X}[Ni_YLi_{1/3-2Y/3}Mn_{2/3-Y/3}]O_2$ ($0 \leq X \leq 1$, $0 < Y < 1/2$) or those obtained by partially substituting Li or a transition metal element thereof with Al or another element, phosphates having an olivine structure such as $Li_{1+X}FePO_4$ and $Li_{1+X}MnPO_4$ (both $-0.1 \leq X \leq 0.3$), lithium manganate ($LiMnO_4$) as a spinel-type compound, and those obtained by partially substituting Mn with Al, Ti, Cr, Fe, Zr, Y, W, Ta, Nb, Ni, Co, Fe, or the like (such as

$LiAl_{0.1}Mn_{0.9}O_4$ and $LiNi_{0.5}Mn_{1.5}O_4$), and the like are exemplified.

[Nb Source]

Anhydrous niobium oxide ($Nb_2O_5$) is poorly soluble in water, and therefore, in the production method of the invention, hydrous niobium oxide which is amorphous and soluble in water is used as a Nb source. Hydrous niobium oxide is a substance represented by a general formula $Nb_2O_5 \cdot nH_2O$ (where n is not 0 and is, for example, $3 \leq n \leq 16$).

[Polyacid Ion]

A polyacid is an anionic species formed by condensation of an oxoacid, and a polyacid of a transition metal element can be regarded as a molecular ionic species of a metal oxide. When there is only one type of metal element, it is called isopolyacid, and when there are a plurality of metal elements, it is called heteropolyacid.

Although a potential-pH diagram for niobium has not been established yet at present, since a hydroxide of niobium precipitates in a neutral region, it is considered that a solid phase of $Nb(OH)_5$, $HNbO_3$, or the like is a stable chemical species in the pH region. When an alkali is added to an aqueous solution in which a solid phase thereof is present to raise the pH of the system, niobium begins to dissolve in the form of, for example, $Nb(OH)_6^-$, $NbO_3^-$, or the like due to the presence of excess $OH^-$ ions. It is considered that when the pH of the system further increases, soluble niobium oxide will take on various condensed states according to the pH of the system, but in this description, it is considered that niobium oxide solubilized on the alkaline side will collectively become a polyacid ion of niobium. Note that the polyacid ion of niobium once solubilized on the alkaline side will maintain the form of a polyacid even if phosphoric acid is added and the pH of the system is lowered to about 4. The aqueous solution containing niobium polyacid ions, lithium ions, and phosphate ions of the invention contains niobium in the existence form of a polyacid, and therefore has excellent storage stability. The existence form of niobium need only to be a soluble polyacid ion, and the structure thereof is not particularly limited.

Whether niobium in an aqueous solution is in the form of a polyacid ion can be checked by FT-IR measurement. When niobium in an aqueous solution is in the form of a polyacid ion, an absorption peak derived from a Nb-O bond is observed at a wavenumber of around $850\ cm^{-1} \pm 20\ cm^{-1}$.

[Li Source]

In the production method of the invention, lithium hydroxide (LiOH) is used as a Li source. LiOH may be either anhydrous or hydrated. LiOH added to the aqueous solution dissociates into $Li^+$ and $OH^-$ and exhibits strong alkalinity. In the method for producing a precursor aqueous solution of lithium niobate described in PTL 2 and PTL 3, niobic acid and hydrogen peroxide are allowed to react first, then ammonia water is added thereto to increase the pH, and finally a Li salt is added thereto to prepare the precursor aqueous solution. On the other hand, the method for producing an aqueous solution containing niobium polyacid ions, lithium ions, and phosphate ions of the invention is characterized in that LiOH is first added to an aqueous solution containing niobic acid to dissolve niobic acid.

Since LiOH itself is a strong alkali, when LiOH is added to an aqueous solution containing niobic acid, the pH of the system increases and niobium oxide dissolves, and niobium polyacid ions are stably formed. Thereafter, hydrogen peroxide is added to the alkaline aqueous solution containing niobium polyacid ions and lithium ions, and the effect of hydrogen peroxide will be described later.

Since a coating layer of a solid electrolyte having ion conduction property is formed finally, the addition amount of lithium is preferably set so that Li/Nb being a molar ratio with respect to 1 mole of niobium contained in the niobium polyacid ions is more than 0.6 and 2.0 or less.

It is not preferable that Li/Nb is 0.6 or less because the lithium ion conduction property deteriorates due to a deficiency of lithium. Further, it is not preferable that Li/Nb is more than 2.0 because the storage stability deteriorates due to an increase in pH caused by excess lithium hydroxide. From the viewpoint of ionic conductivity, Li/Nb is preferably 0.9 or more, and more preferably 0.95 or more. Further, from the viewpoint of ionic conductivity, Li/Nb is preferably 1.5 or less, and more preferably 1.4 or less.

The reason why the storage stability of the aqueous solution containing niobium polyacid ions, lithium ions, and phosphate ions of the invention is better than that of the precursor aqueous solution obtained by the techniques described in PTL 2 and PTL 3 is presumed to be as follows.

In the techniques described in PTL 2 and PTL 3, niobium is present in the form of a peroxo complex in an aqueous solution, and it is known that a peroxo ion coordinated to niobium is easily desorbed and is unstable.

On the other hand, niobium in the aqueous solution containing niobium polyacid ions, lithium ions, and phosphate ions of the invention is considered to be mainly in the form of a relatively stable polyacid, and when hydrogen peroxide is added to the aqueous solution, the storage stability is further improved. The aqueous solution of the invention does not contain an organic material unlike the coating liquid described in PTL 1, and therefore a coating layer with a low volume resistivity can be obtained finally.

[Phosphate Ion]

The greatest technical feature of the invention is that phosphate ions are allowed to coexist in an aqueous solution containing niobium polyacid ions and lithium ions. As a supply source of phosphate ions, orthophosphoric acid, metaphosphoric acid, pyrophosphoric acid, or a water-soluble phosphate ($PO_4^{3-}$) salt such as a sodium salt or an ammonium salt thereof can be used. Here, phosphoric acid is a tribasic acid and dissociates in three stages in an aqueous solution, so that it can take various existence forms such as phosphate ions, monohydrogen phosphate ions, dihydrogen phosphate ions, and pyrophosphate ions in an aqueous solution. However, the existence form is determined by the pH of the aqueous solution, not by the type of chemical used as the supply source of phosphate ions, and therefore the above ions containing a phosphate group are collectively referred to as phosphate ions.

In the case of the aqueous solution containing niobium polyacid ions, lithium ions, and phosphate ions of the invention, an absorption peak derived from phosphate ions is observed at 1,000 to 1,150 $cm^{-1}$ in FT-IR measurement.

The reason why the increase in the specific surface area of the coated positive electrode active material is prevented when phosphate ions are allowed to coexist in the aqueous solution of niobium polyacid ions and lithium ions is unclear at present, but the inventors speculate as follows.

That is, a possible mechanism is as follows: the existence of phosphate ions contained in the aqueous solution containing niobium polyacid ions, lithium ions, and phosphate ions of the invention improves the wettability of the aqueous solution to the surface of the positive electrode active material; due to the action of the phosphate ions contained in the aqueous solution, the double layer structure at the interface is changed to change the structure of the coating layer; a trace amount of phosphate ions contained in the coating layer prevents the generation of pores in the coating layer during drying; or the like.

In the method for producing an aqueous solution containing niobium polyacid ions, lithium ions, and phosphate ions of the invention, it is possible to prevent the precipitation of niobic acid in the aqueous solution containing niobium polyacid ions, lithium ions, and phosphate ions by adding the aqueous solution of phosphate ions to an aqueous solution, which contains lithium and a polyacid of niobium, and in which niobium polyacid ions are stably formed. At that time, precipitates (colloids) containing $Li_3PO_4$ or the like as a main component may be generated in a large amount due to a sudden increase in the phosphate ion concentration. A high concentration of colloidal particles in the aqueous solution containing niobium polyacid ions, lithium ions, and phosphate ions causes an increase in the specific surface area of the coated positive electrode active material, and therefore is not preferable.

In order to prevent the generation of the colloids, it is preferable to adjust the addition rate of the aqueous solution of phosphate ions to the aqueous solution containing niobium polyacid ions and lithium ions. In order to prevent the generation of the colloids, the addition rate of the aqueous solution of phosphate ions is preferably set to 3.07 mol/min or less of phosphate ions per mole of lithium in the aqueous solution containing niobium polyacid ions and lithium ions. It is more preferably 2 mol/min or less, and even more preferably 1 mol/min or less or 0.6 mol/min or less. The lower limit value of the addition rate is not particularly limited, and may be, for example, 0.07 mol/min or more from the viewpoint of production time.

Whether the colloids are generated can be checked based on the value of an absorbance at a wavelength of 660 nm in the aqueous solution containing niobium polyacid ions, lithium ions, and phosphate ions. This is due to the fact that the absorbance at a wavelength of 660 nm indicates the intensity of scattered light caused by colloidal microparticles present in the aqueous solution containing niobium polyacid ions, lithium ions, and phosphate ions. Therefore, a high absorbance in the precursor solution according to the invention indicates that the concentration of microparticles present in the aqueous solution is high (see, for example, JIS K 0101).

When the positive electrode active material is coated using the aqueous solution having a high microparticle concentration, the microparticles may adhere to the surface of the positive electrode active material, making the coating layer rough and the thickness of the coating layer uneven, which may cause an increase in the specific surface area. According to the studies of the inventors, when the value of the absorbance at a wavelength of 660 nm of an aqueous solution containing niobium polyacid ions, lithium ions, and phosphate ions is 0.1 or less, even if colloidal microparticles are present in the aqueous solution, the amount is small, the coating layer thickness is prevented from becoming uneven, and also the increase in the specific surface area is prevented. The value of the absorbance is more preferably 0.08 or less, and even more preferably 0.07 or less. In the invention, the lower limit value of the absorbance is not particularly specified, and may be, for example, 0.001 or more.

As for the content of phosphate ions in the aqueous solution containing niobium polyacid ions, lithium ions, and phosphate ions, it is preferable that the value of P/(Nb + Li + P) being the ratio of the number of moles of phosphorus to the sum of the number of moles of each of niobium, lithium, and phosphorus contained in the aqueous solution is 0.04 or more and less than 0.5. When the value of the ratio is less than 0.04, the effect of adding phosphate ions is insufficient. From the viewpoint of the ionic conductivity, P/(Nb + Li + P) is preferably 0.08 or more. When the value of P/(Nb + Li + P) is 0.5 or more, the effect of adding phosphate ions is saturated. From the viewpoint of the ionic conductivity, P/(Nb + Li + P) is preferably 0.35 or less. The range of P/(Nb + Li + P) is more preferably 0.1 or more and 0.4 or less, and even more preferably 0.2 or more and 0.4 or less.

The sum of the contents of lithium, niobium, and phosphorus in the aqueous solution containing niobium polyacid ions, lithium ions, and phosphate ions is preferably 1 mass% or more and 20 mass% or less. The sum is more preferably 3 mass% or more and 10 mass% or less. The sum is still more preferably 5 mass% or more and 8 mass% or less. When the sum of the contents of lithium, niobium, and phosphorus is less than 1 mass%, it is necessary to increase the amount of the aqueous solution containing niobium polyacid ions, lithium ions, and phosphate ions in order to obtain the required film thickness of the coating layer, and the amount of water increases, and therefore it is disadvantageous in terms of cost. A low concentration is not economical because the water content increases for achieving the required coating film thickness. When the sum of the contents of lithium, niobium, and phosphorus exceeds 20 mass%, the viscosity of the aqueous solution containing niobium polyacid ions, lithium ions, and phosphate ions increases, which may cause clogging of a thin pipe of an apparatus used for the coating treatment.

The amount of impurity elements other than lithium, niobium, phosphorus, oxygen, and hydrogen in the aqueous solution containing niobium polyacid ions, lithium ions, and phosphate ions is preferably 10 mass% or less. The amount is more preferably 1 mass% or less. Possible unavoidable impurities include carbonate ions. Here, the term "impurities" refers to impurities contained in an evaporation residue when the precursor aqueous solution is evaporated to dryness at 200°C. When the evaporation to dryness is performed at 200°C, a carbonate ion binds to a counter cation and precipitates as a carbonate.

[Hydrogen Peroxide]

To the aqueous solution of the invention, hydrogen peroxide can be further added in order to improve the storage stability. In this case, hydrogen peroxide is preferably added so that the concentration of hydrogen peroxide in the aqueous solution is 0.01 mass% or more and 10 mass% or less. When the concentration of hydrogen peroxide is less than 0.01 mass%, the generated polyacid of niobium reacts with a hydroxide ion and easily decomposes. When the concentration of hydrogen peroxide exceeds 10 mass%, the generated polyacid of niobium may react with hydrogen peroxide to form an unstable peroxo complex. Hydrogen peroxide is preferably added so that the concentration of hydrogen peroxide in the aqueous solution is 0.05 mass% or more and 5 mass% or less, and more preferably 0.1 mass% or more and 1 mass% or less.

It is preferable that ($PO_A$/Nb) being the ratio of the number of moles in the addition amount of hydrogen peroxide to niobium is set in the range of 0.1 or more and 1 or less. By setting the ratio to 0.1 or more, it is advantageous in avoiding the decomposition of the polyacid of niobium by reacting with a hydroxide ion. Further, by setting the ratio to 1 or less, it is advantageous in avoiding the formation of an unstable peroxo complex due to the reaction of the generated polyacid of niobium with hydrogen peroxide. The ($PO_A$/Nb) being the ratio of the number of moles in the addition amount of hydrogen peroxide to niobium is preferably 0.05 or more and 0.5 or less. It is more preferably 0.1 or more and 0.35 or less.

From the viewpoint of reactivity, the addition of hydrogen peroxide is preferably performed after hydrous niobium oxide is dissolved together with LiOH to form stable niobium polyacid ions. It does not matter if either of the addition of the phosphate ions described above and the addition of hydrogen peroxide in this section is performed first.

Here, the added hydrogen peroxide decomposes over time, but is preferably contained in the form of hydrogen peroxide in an amount of 0.01 mass% or more and 6.7 mass% or less in the aqueous solution. When the amount of hydrogen peroxide is less than 0.01 mass%, the effect of maintaining the stability of the precursor aqueous solution is small. When the amount of hydrogen peroxide exceeds 6.7 mass%, the effect of adding hydrogen peroxide is saturated. The concentration of hydrogen peroxide in the aqueous solution is preferably 0.05 mass% or more and 5 mass% or less, and more preferably 0.1 mass% or more and 1 mass% or less.

Further, it is preferable that ($PO_C$/Nb) being the ratio of the number of moles of hydrogen peroxide per mole of niobium calculated from the concentration of hydrogen peroxide and the concentration of niobium present in the aqueous solution is in the range of 0.01 or more and 1 or less. When the ratio exceeds the above range, not only is the effect of adding hydrogen peroxide saturated, but also the positive electrode active material may be dissolved when the aqueous solution is used as a coating liquid. When the amount of hydrogen peroxide is too small, the polyacid of niobium reacts with a hydroxide ion and easily decomposes. A more preferable range of $PO_C$/Nb is 0.05 or more and 0.5 or less. It is more preferably 0.1 or more and 0.35 or less.

[pH]

In the production method of the invention, the pH of the aqueous solution when niobium polyacid ions are formed is almost automatically determined based on the addition amount of LiOH, which is a strong alkali, the addition amount of phosphoric acid, and the addition amount of hydrogen peroxide, and therefore it is not necessary to particularly perform pH adjustment, and the pH is 7.5 to 12.5 which is on the alkaline side. The pH is more preferably 9.0 to 12.0 because niobium polyacid ions are stably formed. When phosphoric acid is added to a solution containing this polyacid of niobium and lithium, the pH of the system decreases, but it has been verified that the polyacid of niobium exists stably at a pH of 3 or higher. The pH of the solution to which phosphoric acid is added is preferably 12.5 or lower, and more preferably 12 or lower. The pH value here is a value measured using a glass electrode with a pH meter equipped with a temperature compensation electrode, calibrated using an appropriate buffer solution according to a pH range to be measured based on JIS Z 8802.

[Production Method]

In the method for producing an aqueous solution containing niobium polyacid ions, lithium ions, and phosphate ions of the invention, as described above, hydrous niobium oxide is used as a starting material for niobium. Hydrous niobium oxide and LiOH are dissolved in water to obtain an aqueous solution containing niobium polyacid ions and lithium ions, and then phosphate ions are added to the aqueous solution to obtain an aqueous solution containing niobium polyacid ions, lithium ions, and phosphate ions. At that time, it is preferable that the value of P/(Nb + Li + P) being the ratio of the number of moles of phosphorus to the sum of the number of moles of each of niobium, lithium, and phosphorus is set to 0.04 or more and less than 0.5, and Li/Nb being the molar ratio of niobium and lithium is set to more than 0.6 and 2.0 or less. Further, it is preferable that the total concentration of niobium is set to 1 mass% or more and 20 mass% or less in terms of niobium. When hydrogen peroxide is added, it is preferable to add hydrogen peroxide so that the concentration of hydrogen peroxide in the aqueous solution is 0.01 mass% or more and 10 mass% or less.

[Coating Treatment]

Examples of an embodiment of a coating treatment for a positive electrode active material for a lithium ion secondary battery using the aqueous solution containing niobium polyacid ions, lithium ions, and phosphate ions of the invention include the following embodiment.

As the positive electrode active material to be subjected to the coating treatment, one having a specific surface area of about 0.1 to 2 $m^2/g$ can be used. The specific surface area of the positive electrode active material is inversely proportional to the particle diameter thereof, and therefore the specific surface area of the positive electrode active material is appropriately selected according to the application of the lithium ion secondary battery.

The thickness of the coating layer that covers the positive electrode active material is preferably set to 3 to 20 nm, and more preferably 5 to 15 nm.

In the coating treatment, a known method such as a tumbling fluidized bed coating method or a high-speed airflow collision shearing method is used, and the positive electrode active material is brought into contact with the aqueous solution containing niobium polyacid ions, lithium ions, and phosphate ions of the invention, followed by a heat treatment such as drying, and thereby a positive electrode active material having a coating layer can be obtained.

Examples

[Qualitative Evaluation of Aqueous Solution]

Qualitative evaluation of the dissolved chemical species in the aqueous solution was performed by Fourier transform infrared spectroscopy (FT-IR) using a NICOLET 7600 manufactured by Thermo Fisher Scientific, Inc. In order to remove the peak on the low wavenumber side of water being a solvent, water was used for background measurement, and the measurement was performed by an attenuated total reflection (ATR) method. In the measurement, a germanium prism was used, and the incident angle was set to 45°. By performing the FT-IR measurement, it can be checked that niobium exists as a polyacid ion and phosphorus exists as a phosphate ion in the aqueous solution containing niobium polyacid ions, lithium ions, and phosphate ions of the invention.

[Quantitative Determination of Li, Nb, and P in Aqueous Solution]

An analysis of the components of the aqueous solution was performed using an inductively coupled plasma atomic emission spectrometer (ICP-AES, Agilent Technology 700 Series). From the precursor solution, 0.1 g of a sample was taken and weighed, 15 mL of pure water and 5 mL of hydrochloric acid were added thereto, and the mixture was heated and then allowed to cool. After 2 mL of aqueous hydrogen peroxide was further added thereto and the mixture was allowed to cool, the liquid volume was adjusted to 100 mL and an ICP-AES analysis was performed. The number of moles of the invention was calculated from the contents of niobium, lithium, and phosphorus obtained by the quantitative analysis using ICP.

[Method for Quantifying Hydrogen Peroxide in Aqueous Solution]

Prior to the quantitative operation, a Ti-PAR solution is prepared in advance. The Ti-PAR solution is prepared by mixing 20 mL of a Ti solution with a titanium concentration of 1 mmol/L prepared using a commercially available titanium standard solution with 15 mL of a PAR solution in which 11 mg of PAR (4-(2-pyridylazo)-resorcinol) is dissolved in a 1 mass% sodium hydroxide aqueous solution and the volume is adjusted to 50 mL with ultrapure water.

In a plastic container in which 0.05 mL of special grade nitric acid and 20 mL of special grade methanol are placed in advance, 0.1 mL of the aqueous solution is added as a sample and mixed by gentle shaking. After a precipitate is allowed to settle, filtration is performed using a 0.45 μm filter. At that time, it is preferable to start filtration after about 1 minute from the addition of the solution.

A measurement solution obtained by taking 0.25 mL of the filtrate, and sequentially adding 5 mL of methanol, 1 mL of the Ti-PAR solution, and 1.2 mL of a buffer solution at pH 8.6 prepared by mixing 5 mL of 1 mol/L ammonia water and 40 mL of 1 mol/L ammonium chloride thereto, and adjusting the volume to 10 mL with methanol is allowed to stand at 40 to 45°C for 30 minutes, and thereafter the absorbance is measured at a wavelength of 520 nm using a spectrophotometer U-2800 manufactured by Hitachi High-Technologies Corporation. The hydrogen peroxide concentration was quantified from the relative intensity of the absorbance with a standard solution of hydrogen peroxide using a standard addition method. The number of moles of the invention was calculated from the content of hydrogen peroxide obtained by this quantitative analysis.

[Absorbance Measurement]

Into a quartz cell (10 mm × 10 mm × 45 mm), 3.5 mL of the aqueous solution was dispensed, and the absorbance was measured at a wavelength of 400 to 700 nm using a spectrophotometer U-2800 manufactured by Hitachi High-Technologies Corporation. The temperature of the precursor solution during the measurement was set to 25°C. At that time, as the zero point of the absorbance, the absorbance obtained when ultrapure water with an electrical conductivity of 17 MΩ cm or more at 25°C was placed in the measurement cell and measured was used.

The absorbance at a wavelength of 660 nm indicates the intensity of scattered light caused by the microparticles in the precursor aqueous solution, and a high absorbance indicates that the microparticle concentration is high (see JIS K 0101).

[Measurement of BET Specific Surface Area]

The BET specific surface area of the positive electrode active material before and after coating was determined by a single-point BET method using 4 Sorb US manufactured by Yuasa Ionics Co., Ltd. The increase rate of the BET specific surface area before and after coating is defined by the following formula (1).

$$\text{BET specific surface area increase rate} = 100 \times (BET_A - BET_B)/BET_B \ (1) \qquad (1)$$

Here, $BET_A$ denotes the BET specific surface area after coating, and $BET_B$ denotes the BET specific surface area before coating. In the invention, when the BET specific surface area increase rate is 100% or less, it is determined that the increase in the specific surface area was prevented.

[Evaluation of Ion Conduction Property]

The ion conduction property of the coating layer obtained from the aqueous solution of the invention was evaluated using a bulk powder formed from the aqueous solution. The aqueous solution was evaporated to dryness in a dryer set at 100°C, and the obtained powder was further fired in air at 300°C for 12 hours. In a mold with a diameter of 10 mm, 0.5 g of the powder after firing was placed and pressed at 20 MPa with a press machine to obtain a green compact. The obtained green compact was subjected to impedance measurement in a frequency range of 100 Hz to 4 MHz at a temperature of 25°C in an Ar atmosphere using a potentio/galvanostat (1470E manufactured by Solartron Analytical) and a frequency response analyzer (1255B manufactured by Solartron Analytical). The resistance value of the powder sample of the oxide was determined from the intercept of the Cole-Cole plot (complex impedance plane plot) of the measured value, and the ionic conductivity was calculated from the obtained resistance value.

[Calculation of Thickness of Coating Layer]

The thickness of the coating layer obtained by the above coating treatment is calculated on the assumption that the entire amount of the aqueous solution used in the coating treatment is used for the formation of the coating layer. In that case, it is assumed that lithium, niobium, and phosphorus contained in the aqueous solution are converted to $Li_2O$, $Nb_2O_5$, and $P_2O_5$, respectively, and the volume of the mixture thereof is calculated. The thickness of the coating layer is defined by the following formula (2).

[Thickness of coating layer (nm)] = $10^3 \times$ [volume of mixture of $Li_2O$, $Nb_2O_5$, and $P_2O_5$ ($cm^3$)]/[amount of positive electrode active material $\times$ specific surface area of positive electrode active material ($m^2/g$)] (2) (2)

Here, the volume of the mixture is determined as follows.

When the Li content in the aqueous solution is denoted by a (mass%), the Nb content is denoted by b (mass%), and the P content is denoted by c (mass%), from the atomic weights of Li, Nb, and P and the molecular weights of $Li_2O$, $Nb_2O_5$, and $P_2O_5$,

$Li_2O$ content (mass%) a' = a $\times$ molecular weight of $Li_2O$/(atomic weight of Li $\times$ 2),

$Nb_2O_5$ content (mass%) b' = b $\times$ molecular weight of $Nb_2O_5$/(atomic weight of Nb $\times$ 2), and

$P_2O_5$ content (mass%) c' = c $\times$ molecular weight of $P_2O_5$/(atomic weight of P $\times$ 2).

When it is assumed that the amount of the aqueous solution used in the coating treatment is x (g), the density of $Li_2O$ is 2.0 g/$cm^3$, the density of $Nb_2O_5$ is 4.6 g/$cm^3$, and the density of $P_2O_5$ is 2.4 g/$cm^3$, the following formula is established.

Volume ($cm^3$) of mixture of $Li_2O$, $Nb_2O_5$, and $P_2O_5$ = (a'/2.0 + b'/4.6 + c'/2.4) $\times$ x/100

[Comparative Example 1]

In a 0.5 L beaker, 81.6 g of pure water and 4.195 g of lithium hydroxide monohydrate ($LiOH \cdot H_2O$) were placed, and lithium hydroxide was dissolved by stirring. Then, 13.84 g of hydrous niobium oxide ($Nb_2O_5 \cdot nH_2O$, Nb concentration: 67.4 mass%) dried at 300°C was mixed therein, and the mixture was stirred at 70°C for 8 hours to solubilize the hydrous niobium oxide, and a clear aqueous solution containing niobium polyacid ions and lithium ions was obtained. The pH of the obtained aqueous solution was 11.8. In this case, the addition amount of lithium is such that Li/Nb being a molar ratio with respect to 1 mole of niobium contained in the niobium polyacid ions is 1.0. While the aqueous solution containing niobium and lithium was held at 20°C, 3.2 g of a 30% aqueous solution of hydrogen peroxide was added thereto, and 71 g of pure water was further added thereto for the final concentration adjustment to obtain an aqueous solution containing niobium polyacid ions and lithium ions. In this case, the hydrogen peroxide concentration in the aqueous solution was 0.49 mass%. No white turbidity was visually observed in the aqueous solution. When the aqueous solution of Comparative Example 1 was subjected to absorbance measurement, the value of the absorbance at a wavelength of 660 nm was 0.01. The preparation conditions of the aqueous solution of this Comparative Example are shown in Table 1, and the calculated value of the concentration of each element and the hydrogen peroxide concentration in the aqueous solution are shown in Table 2, respectively. When the aqueous solution of this Comparative Example was subjected to FT-IR measurement, an absorption peak derived from a Nb-O bond was observed at a wavenumber of around 850 $cm^{-1} \pm 20$ $cm^{-1}$, and it is considered that the solubilized hydrous niobium oxide is present in the form of niobium polyacid ions. The FT-IR spectrum of the aqueous solution obtained in this Comparative Example is shown in FIG. 1.

The surface of a positive electrode active material ($LiN_{1/3}Mn_{1/3}Co_{1/3}O_2$, manufactured by MTI, EQ-Lib-LNCM111) having a BET specific surface area of 0.636 m2/g was coated by spraying 25.2 g of the aqueous solution obtained in this Comparative Example onto the positive electrode active material and drying the aqueous solution in parallel using a tumbling fluidized coating apparatus (MP-micro, manufactured by Powrex Corporation). The operating conditions of the rolling fluidized coating apparatus were as follows: intake gas: air, intake air temperature: 100°C, intake air flow rate: 0.1 $m^3$/h, rotor rotation speed: 1,000 rpm, and spraying rate: 0.5 g/min. The amount of the aqueous solution is the amount corresponding to the thickness of the coating layer of 10 nm. The BET specific surface area after coating was 1.91 $m^2$/g, and the BET specific surface area increase rate when the coating treatment was performed using the aqueous solution of this Comparative Example was 200%. The coating treatment conditions and the BET specific surface area increase rate are shown in Table 3.

[Example 1]

An aqueous solution containing niobium polyacid ions, lithium ions, and phosphate ions of Example 1 was obtained using the same procedure as that in Comparative Example 1 up to the addition of hydrogen peroxide and by further adding 1.0 g of phosphoric acid (manufactured by Wako Pure Chemical Industries, Ltd., 80 mass%), and then adding 75 g of pure water for concentration adjustment. When phosphoric acid was added, phosphate ions were added at a rate of 0.25 mol/min per mole of lithium in the aqueous solution containing niobium polyacid ions and lithium ions while stirring the solution. In this case, P/(Nb + Li + P) was 0.04, and no generation of white colloids was observed. When the aqueous solution of Example 1 was subjected to absorbance measurement, the value of the absorbance at a wavelength of 660 nm was 0.01.

When the aqueous solution obtained in this Example was subjected to FT-IR measurement, an absorption peak derived from a Nb-O bond was observed at a wavenumber of around 850 $cm^{-1} \pm 20$ $cm^{-1}$, and it is considered that solubilized hydrous niobium oxide is present in the form of niobium polyacid ions. In addition, an absorption peak derived from phosphate ions was observed at a wavenumber of 1,000 to 1,150 $cm^{-1}$. The ionic conductivity of a powder obtained by evaporating the aqueous solution obtained in this Example to dryness at 300°C was $1.225 \times 10^{-8}$ S/cm. When a coating treatment was performed under the same conditions as in Comparative Example 1 using 25.2 g of the aqueous solution obtained in this Example, the thickness of the coating layer was 10 nm, and the BET specific surface area increase rate was 90%, and an effect of preventing the increase in the BET specific surface area was observed as compared with the above-mentioned Comparative Example 1. The preparation conditions of the aqueous solution of this Example are shown in Table 1, the calculated value of the concentration of each element and the hydrogen peroxide concentration in the aqueous solution are shown in Table 2, the coating treatment conditions and the BET specific surface area increase rate are shown in Table 3, and the ionic conductivity of the powder obtained by evaporation to dryness is shown in Table 4.

[Examples 2 to 5]

Aqueous solutions containing niobium polyacid ions, lithium ions, and phosphate ions of Examples 2 to 5 were obtained using the same procedure as that in Example 1 up to the addition of hydrogen peroxide and by variously changing the addition amounts of phosphoric acid and pure water for concentration adjustment and the addition rate of phosphate ions as shown in Table 1. In this case, P/(Nb + Li + P) was set to 0.10 to 0.40, and no generation of white colloids was observed in all Examples. Further, with respect to each Example, the results obtained by performing absorbance measurement in the same manner as in Example 1 are also shown in Table 2. In all Examples, when FT-IR measurement was performed, an absorption peak derived from a Nb-O bond was observed at a wavenumber of around 850 $cm^{-1} \pm 20$ $cm^{-1}$, and it is considered that solubilized hydrous niobium oxide is present in the form of niobium polyacid ions. In addition, an absorption peak derived from phosphate ions was observed at a wavenumber of 1,000 to 1,150 $cm^{-1}$. The FT-IR spectrum of each aqueous solution obtained in these Examples is also shown in FIG. 1. A coating treatment was performed under the same conditions as in Comparative Example 1 using the aqueous solutions obtained in Examples 2 to 5. When the amount of the aqueous solutions used were adjusted so that the thickness of each coating layer was 10 nm in each case, the BET specific surface area increase rate was -1% to 27%. The preparation conditions of the aqueous solutions of Examples 2 to 5 are shown in Table 1, the calculated value of the concentration of each element and the hydrogen peroxide concentration in each aqueous solution are shown in Table 2, the coating treatment conditions and the BET specific surface area increase rate are shown in Table 3, and the ionic conductivity of each powder obtained by evaporation to dryness is shown in Table 4.

From the results in Table 4, it can be said that the P/(Li + Nb + P) ratio is preferably 0.35 or less from the viewpoint of ionic conductivity. The ratio is more preferably 0.08 or more.

[Examples 6 to 9]

Aqueous solutions containing niobium polyacid ions, lithium ions, and phosphate ions of Examples 6 to 9 in which the values of Li/Nb and P/(Nb + Li + P) were changed were obtained using the same procedure as that in Example 1 and by changing each of the addition amounts of lithium hydroxide, phosphoric acid, and pure water for concentration adjustment and the addition rate of phosphate ions as shown in Table 1. In this case, Li/Nb was 0.78 to 2.00, and P/(Nb + Li + P) was 0.20 to 0.40. In all Examples, no generation of white colloids was observed. Further, with respect to each Example, the results obtained by performing absorbance measurement in the same manner as in Example 1 are also shown in Table 2. In all Examples, when FT-IR measurement was performed, an absorption peak derived from a Nb-O bond was observed at a wavenumber of around 850 $cm^{-1} \pm 20$ $cm^{-1}$, and it is considered that solubilized hydrous niobium oxide is present in the form of niobium polyacid ions. In addition, an absorption peak derived from phosphate ions was observed at a wavenumber of 1,000 to 1,150 $cm^{-1}$. A coating treatment was performed under the same conditions as in Comparative Example 1 using the aqueous solutions obtained in Examples 6 to 9. When the amount of the aqueous solution used was adjusted so that the thickness of the coating layer was 10 nm in each case, the BET specific surface area increase rate was -2% to -3%. The preparation conditions of the aqueous solutions of Examples 6 to 9 are shown in Table 1, the calculated value of the concentration of each element and the hydrogen peroxide concentration in each aqueous solution are shown in Table 2, the coating treatment conditions and the BET specific surface area increase rate are shown in Table 3, and each ionic conductivity of a powder obtained by evaporation to dryness with respect to Examples 6 and 7 is shown in Table 5.

From the results in Table 5, it can be said that the Li/Nb ratio is preferably 0.9 or more from the viewpoint of ionic conductivity. The ratio is more preferably 0.95 or more.

[Example 10]

When a positive electrode active material having a BET specific surface area of 1.085 $m^2/g$ was subjected to a coating treatment using 36.3 g of the aqueous solution containing niobium polyacid ions, lithium ions, and phosphate ions obtained in Example 4, the BET specific surface area increase rate was -1%.

[Example 11]

An aqueous solution containing niobium polyacid ions, lithium ions, and phosphate ions was obtained using the same procedure as that in Example 2 except that the addition rate of phosphate ions was set to 3.38 mol/min. In this Example, when phosphoric acid was added, white colloids were slightly generated, but no white turbidity was visually observed in the aqueous solution. The absorbance obtained by performing absorbance measurement for this Example is shown in Table 2.

A coating treatment was performed under the same conditions as in Comparative Example 1 using the aqueous solution obtained in this Example. When the amount of the aqueous solution used was adjusted so that the thickness of the coating layer was 10 nm in each case, the BET specific surface area increase rate was 73%, and an effect of preventing the increase in the BET specific surface area was observed as compared with the above-mentioned Comparative Example 1. From the results of comparing Example 2 and Example 11, by setting the phosphate ion addition rate of phosphate ions to 3.07 mol/min or less per mole of lithium in the aqueous solution containing niobium polyacid ions and lithium ions, it is possible to prevent the generation of colloidal particles and further prevent the increase in the BET specific surface area due to coating.

[Comparative Example 2]

When the same procedure as that in Comparative Example 1 was used up to the addition of hydrogen peroxide, and 24.5 g of phosphoric acid was further added at a phosphate ion addition rate of 0.24 mol/min per mole of lithium in the aqueous solution containing niobium polyacid ions and lithium ions, many white colloids were generated. In this case, P/(Nb + Li + P) was 0.50. The white colloids did not redissolve even when diluted by adding pure water for concentration adjustment, and white turbidity was visually observed in the aqueous solution, and therefore a coating treatment using this Comparative Example was not performed.

[Comparative Example 3]

When the same procedure as that in Comparative Example 1 was used except that the addition amount of lithium hydroxide was set to 2.517 g and Li/Nb was set to 0.50, and 4.9 g of phosphoric acid was further added at a phosphate ion addition rate of 0.24 mol/min per mole of lithium in the aqueous solution containing niobium polyacid ions and lithium ions after hydrogen peroxide was added, many white colloids were generated. The white colloids did not redissolve even when diluted by adding pure water for concentration adjustment, and white turbidity was visually observed in the aqueous solution, and therefore a coating treatment using this Comparative Example was not performed.

As described above, by subjecting the positive electrode active material of a lithium ion battery positive electrode to a coating treatment using the aqueous solution containing niobium polyacid ions, lithium ions, and phosphate ions specified by the invention, it is possible to prevent the increase in the BET specific surface area due to coating.

[Table 1]

Table 1

| | $LiOH \cdot H_2O$ (g) | $Nb_2O_5 \cdot nH_2O$ (Nb=67.4%) (g) | Li/Nb | Mass of pure water (g) | $H_2O_2$ (30%) (g) | $H_3PO_4$ (80%) (g) | P/(Li+Nb+P) | Mass of pure water for concentration adjustment (g) | pH | Total liquid amount (g) | $PO_A$/Nb molar ratio | Addition rate of P per mole of Li (mol/min) |
|---|---|---|---|---|---|---|---|---|---|---|---|---|
| Comparative example 1 | 4.195 | 13.84 | 1.00 | 81.6 | 3.2 | 0 | - | 71 | 11.7 | 148 | 0.28 | - |
| Example 1 | 4.195 | 13.84 | 1.00 | 81.6 | 3.2 | 1.0 | 0.04 | 75 | 9.5 | 154 | 0.28 | 0.25 |
| Example 2 | 4.195 | 13.84 | 1.00 | 81.6 | 3.2 | 2.7 | 0.10 | 86 | 8.7 | 164 | 0.28 | 0.25 |
| Example 3 | 4.195 | 13.84 | 1.00 | 81.6 | 3.2 | 6.1 | 0.20 | 97 | 7.7 | 184 | 0.28 | 0.26 |
| Example 4 | 4.195 | 13.84 | 1.00 | 81.6 | 3.2 | 10.5 | 0.30 | 128 | 4.4 | 210 | 0.28 | 0.23 |
| Example 5 | 4.195 | 13.84 | 1.00 | 81.6 | 3.2 | 16.3 | 0.40 | 149 | 3.6 | 243 | 0.28 | 0.25 |
| Example 6 | 7.000 | 13.84 | 1.67 | 81.6 | 3.2 | 8.2 | 0.20 | 115 | 8.5 | 205 | 0.28 | 0.16 |
| Example 7 | 3.270 | 13.84 | 0.78 | 81.6 | 3.2 | 5.5 | 0.20 | 93 | 7.2 | 177 | 0.28 | 0.33 |
| Example 8 | 5.600 | 13.84 | 1.33 | 81.6 | 3.2 | 12.3 | 0.30 | 133 | 4.3 | 224 | 0.28 | 0.19 |
| Example 9 | 8.400 | 13.84 | 2.00 | 81.6 | 3.2 | 24.5 | 0.40 | 197 | 4.0 | 304 | 0.28 | 0.13 |
| Example 10 | Same as in Example 4 | | | | | | | | | | | |
| Example 11 | Same as in Example 2 | | | | | | | | | | | 3.38 |
| Comparative example 2 | 4.195 | 13.84 | 1.00 | 81.6 | 3.2 | 24.5 | 0.50 | 193 | 2.9 | 290 | 0.28 | 0.24 |
| Comparative example 3 | 2.517 | 13.84 | 0.60 | 81.6 | 3.2 | 4.9 | 0.20 | 84 | 6.3 | 170 | 0.28 | 0.44 |

[Table 2]

Table 2

| | Li (mass%) | Nb (mass%) | P (mass%) | $H_2O_2$ analytical value (mass%) | P/(Li+Nb+P) molar ratio | POc/Nb molar ratio | Absorbance [*1] |
|---|---|---|---|---|---|---|---|
| Comparative example 1 | 0.47 | 6.30 | 0.0 | 0.49 | 0 | 0.21 | 0.01 |
| Example 1 | 0.45 | 6.06 | 0.2 | 0.42 | 0.04 | 0.19 | 0.01 |
| Example 2 | 0.42 | 5.69 | 0.4 | 0.37 | 0.10 | 0.18 | 0.02 |
| Example 3 | 0.38 | 5.07 | 0.8 | 0.48 | 0.20 | 0.26 | 0.02 |
| Example 4 | 0.33 | 4.44 | 1.3 | 0.28 | 0.30 | 0.17 | 0.03 |
| Example 5 | 0.29 | 3.84 | 1.7 | 0.35 | 0.40 | 0.25 | 0.04 |
| Example 6 | 0.56 | 4.55 | 1.0 | 0.38 | 0.20 | 0.23 | 0.02 |
| Example 7 | 0.31 | 5.27 | 0.8 | 0.40 | 0.20 | 0.21 | 0.02 |
| Example 8 | 0.41 | 4.16 | 1.4 | 0.38 | 0.30 | 0.25 | 0.03 |
| Example 9 | 0.46 | 3.07 | 2.0 | 0.16 | 0.40 | 0.14 | 0.05 |
| Example 10 | Same as in Example 4 | | | | | | |
| Example 11 | Same as in Example 2 | | | | | | 0.15 |
| Comparative example 2 | 0.24 | 3.22 | 2.1 | 0.31 | 0.50 | 0.26 | 1.67 |
| Comparative example 3 | 0.24 | 5.49 | 0.7 | 0.47 | 0.20 | 0.23 | 1.60 |
| *1: wavelength: 660 nm | | | | | | | |

[Table 3]

Table 3

| | Specific surface area of active material ($m^2/g$) | Mass of active material (g) | Thickness of coating layer (nm) | Specific surface area after coating ($m^2/g$) | BET specific surface area increase rate (%) |
|---|---|---|---|---|---|
| Comparative example 1 | 0.636 | 100 | 10 | 1.910 | 200 |
| Example 1 | 0.636 | 100 | 10 | 1.210 | 90 |
| Example 2 | 0.636 | 100 | 10 | 0.805 | 27 |
| Example 3 | 0.636 | 100 | 10 | 0.648 | 2 |
| Example 4 | 0.636 | 100 | 10 | 0.630 | -1 |
| Example 5 | 0.636 | 100 | 10 | 0.635 | 0 |
| Example 6 | 0.636 | 100 | 10 | 0.621 | -2 |
| Example 7 | 0.636 | 100 | 10 | 0.625 | -2 |
| Example 8 | 0.636 | 100 | 10 | 0.618 | -3 |

(continued)

| | Specific surface area of active material ($m^2/g$) | Mass of active material (g) | Thickness of coating layer (nm) | Specific surface area after coating ($m^2/g$) | BET specific surface area increase rate (%) |
|---|---|---|---|---|---|
| Example 9 | 0.636 | 100 | 10 | 0.617 | -3 |
| Example 10 | 1.085 | 100 | 10 | 1.079 | -1 |
| Example 11 | 0.636 | 100 | 2 | 1.079 | 73 |

[Table 4]

Table 4

| | Li (mass%) | Nb (mass%) | P (mass%) | P/(Li+Nb+P) molar ratio | Li/Nb molar ratio | Ionic conductivity $10^{-8}$ S/cm |
|---|---|---|---|---|---|---|
| Example 1 | 0.45 | 6.06 | 0.2 | 0.04 | 1.00 | 1.225 |
| Example 2 | 0.42 | 5.69 | 0.4 | 0.10 | 1.00 | 3.027 |
| Example 3 | 0.38 | 5.07 | 0.8 | 0.20 | 1.00 | 3.119 |
| Example 4 | 0.33 | 4.44 | 1.3 | 0.30 | 1.00 | 3.497 |
| Example 5 | 0.29 | 3.84 | 1.7 | 0.40 | 1.00 | 0.740 |

[Table 5]

Table 5

| | Li (mass%) | Nb (mass%) | P (mass%) | P/(Li+Nb+P) molar ratio | Li/Nb molar ratio | Ionic conductivity $10^{-8}$ S/cm |
|---|---|---|---|---|---|---|
| Example 3 | 0.38 | 5.07 | 0.8 | 0.20 | 1.00 | 3.119 |
| Example 6 | 0.56 | 4.55 | 1.0 | 0.20 | 1.66 | 2.774 |
| Example 7 | 0.31 | 5.27 | 0.8 | 0.20 | 0.78 | 0.836 |

## Claims

1. An aqueous solution, comprising niobium polyacid ions, lithium ions, and phosphate ions, wherein a value of P/(Nb + Li + P) being a ratio of a number of moles of phosphorus to a sum of a number of moles of each of niobium, lithium, and phosphorus contained in the aqueous solution is 0.04 or more and less than 0.5, and Li/Nb being a molar ratio of lithium to niobium is more than 0.6 and 2.0 or less.

2. The aqueous solution comprising niobium polyacid ions, lithium ions, and phosphate ions according to claim 1, further comprising hydrogen peroxide at a concentration of 0.01 mass% or more and 10 mass% or less.

3. The aqueous solution comprising niobium polyacid ions, lithium ions, and phosphate ions according to claim 2, wherein a value of ($PO_c$/Nb) being a ratio of a number of moles of hydrogen peroxide to a number of moles of niobium present in the aqueous solution is 0.01 or more and 1 or less.

4. The aqueous solution comprising niobium polyacid ions, lithium ions, and phosphate ions according to claim 1, wherein an absorbance of the aqueous solution at a wavelength of 660 nm is 0.1 or less.

5. A method for producing an aqueous solution containing niobium polyacid ions, lithium ions, and phosphate ions, the method comprising:

a step of dissolving a hydrous oxide of niobium and a salt containing lithium in water to obtain an aqueous solution containing niobium polyacid ions and lithium ions; and
a step of adding phosphate ions to the aqueous solution containing niobium polyacid ions and lithium ions.

6. A method for producing an aqueous solution containing niobium polyacid ions, lithium ions, and phosphate ions, the method comprising:

a step of dissolving a hydrous oxide of niobium and a salt containing lithium in water to obtain an aqueous solution containing niobium polyacid ions and lithium ions; and
a step of adding phosphate ions and hydrogen peroxide to the aqueous solution containing niobium polyacid ions and lithium ions.

7. The method for producing an aqueous solution containing niobium polyacid ions, lithium ions, and phosphate ions according to claim 5 or 6, wherein a value of P/(Nb + Li + P) being a ratio of a number of moles of phosphorus to a sum of a number of moles of each of niobium, lithium, and phosphorus is 0.04 or more and less than 0.5, and Li/Nb being a molar ratio of lithium to niobium is more than 0.6 and 2.0 or less.

8. The method for producing an aqueous solution containing niobium polyacid ions, lithium ions, and phosphate ions according to claim 6, wherein a concentration of hydrogen peroxide in the aqueous solution is 0.01 mass% or more and 10 mass% or less.

9. The method for producing an aqueous solution containing niobium polyacid ions, lithium ions, and phosphate ions according to claim 6, wherein a value of ($PO_A$/Nb) being a ratio of a number of moles in the addition amount of hydrogen peroxide to a number of moles of niobium is 0.1 or more and 1.0 or less.

10. The method for producing an aqueous solution containing niobium polyacid ions, lithium ions, and phosphate ions according to claim 5 or 6, wherein phosphate ions are added at a rate of 0.07 mol/min or more and 3.07 mol/min or less per mole of lithium in the aqueous solution containing niobium polyacid ions and lithium ions.

11. A method for producing an active material for a lithium secondary battery, the active material having a coating layer containing lithium niobate, the method comprising:

a step of subjecting a surface of an active material for a lithium secondary battery to a coating treatment with the aqueous solution containing niobium polyacid ions, lithium ions, and phosphate ions according to any one of claims 1 to 4; and
a step of subjecting the active material for a lithium secondary battery subjected to the coating treatment to a heat treatment.

[Fig.1]

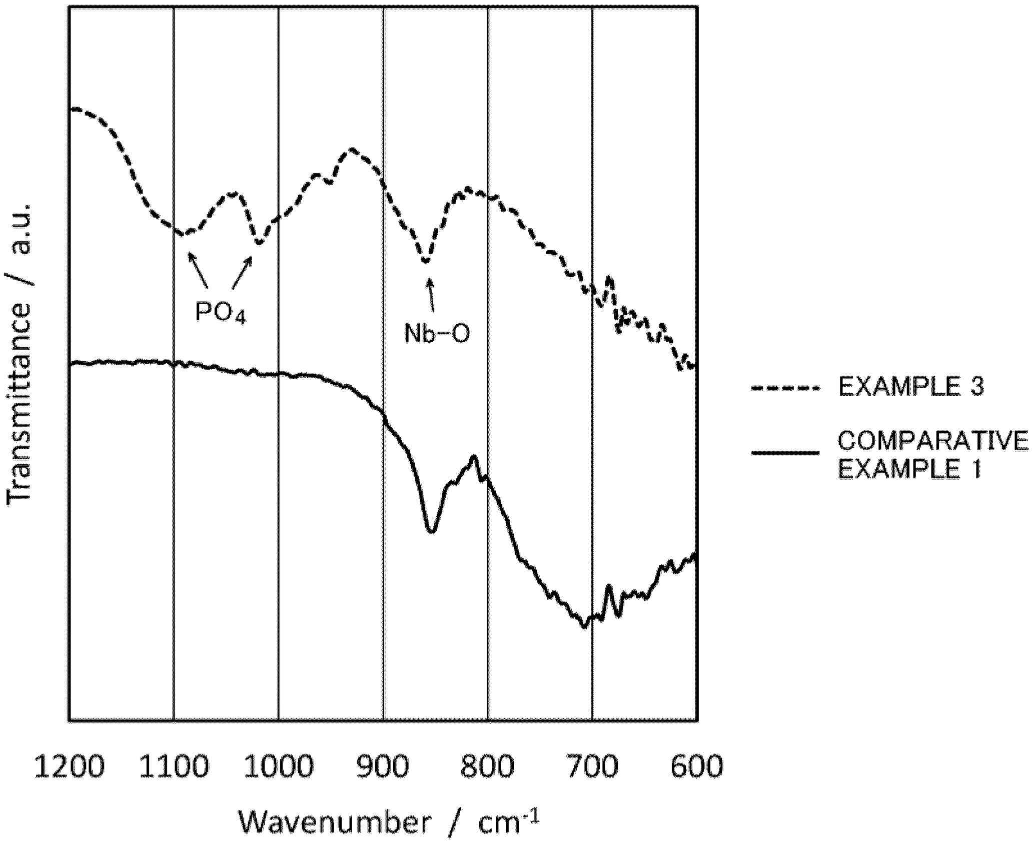

Transmittance / a.u.
PO4
Nb-O
1200
1100
1000
900
800
700
600
Wavenumber / cm-1
EXAMPLE 3
COMPARATIVE EXAMPLE 1

**INTERNATIONAL SEARCH REPORT**

International application No.
**PCT/JP2024/011789**

**A. CLASSIFICATION OF SUBJECT MATTER**

***C01B 25/18***(2006.01)i; ***H01M 4/36***(2006.01)i; ***H01M 4/505***(2010.01)i; ***H01M 4/525***(2010.01)i
FI: C01B25/18; H01M4/36 C; H01M4/505; H01M4/525

According to International Patent Classification (IPC) or to both national classification and IPC

**B. FIELDS SEARCHED**

Minimum documentation searched (classification system followed by classification symbols)

C01B25/00-25/46; C01D15/00-15/10; C01G33/00; H01M4/36; H01M4/505; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2017-191667 A (TOYOTA JIDOSHA KABUSHIKI KAISHA) 19 October 2017 (2017-10-19) | 1-11 |
| A | CN 103199248 A (ZHU, Miaohong) 10 July 2013 (2013-07-10) | 1-11 |
| A | JP 2020-066570 A (DOWA ELECTRONICS MATERIALS CO., LTD.) 30 April 2020 (2020-04-30) | 1-11 |
| A | JP 2014-210701 A (DOWA HOLDINGS CO., LTD.) 13 November 2014 (2014-11-13) | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/011789**

| Patent document cited in search report | Publication date (day/month/year) | Patent family member(s) | Publication date (day/month/year) |
|---|---|---|---|
| JP 2017-191667 A | 19 October 2017 | (Family: none) | |
| CN 103199248 A | 10 July 2013 | (Family: none) | |
| JP 2020-066570 A | 30 April 2020 | (Family: none) | |
| JP 2014-210701 A | 13 November 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007004590 A
- JP 2012074240 A
- JP 2017191667 A
- JP 2020066570 A